# EUROPEAN PATENT SPECIFICATION

(11) **EP 1 753 204 B1**
(45) Date of publication and mention of the grant of the patent: **20.03.2013**
(21) Application number: 05291707.7
(22) Date of filing: 10.08.2005
(51) Int. Cl.: H04L 29/08, H04L 29/06

(54) **System with executing nodes for executing schedules**
System mit ausführenden Knoten für auszuführende Zeitpläne
Système avec des noeuds exécutant pour des plans à exécuter

(43) Date of publication of application: 14.02.2007
(73) Proprietor: Alcatel Lucent, 75007 Paris (FR)
(72) Inventor: Kisel, Andrey, Maidenhead Berkshire SL6 8DH (GB); Molloy, Steve, Clifton Bristol BS83F (GB)
(74) Representative: Narmon, Gisèle Marie Thérèse

(56) References cited:
- US-A- 5 182 640
- US-A1- 2003 093 530
- US-B1- 6 330 719

## Description

The invention relates to a system comprising storing means for storing schedules and comprising executing nodes for executing the schedules.

A node may for example be a server node forming part of a system in the form of a server or may for example be a network node forming part of a system in the form of a network.

A prior art system is known from US 2003/0172212 A1, which discloses a round robin arbitration system. As disclosed in paragraph 0005 of US 2003/0172212 A1, round robin arbitration is defined by sequential, cyclical allocation of resources to numerous requesters.

The known system is disadvantageous, inter alia, owing to the fact that round robin arbitration requires the nodes to be monitored by a monitoring process. Such a monitoring process makes the system relatively complex. Further, the monitoring process forms a so-called single point of failure. In case the monitoring process fails, the whole system fails.

It is an object of the invention, inter alia, to provide a system as defined above that is relatively simple.

The system according to the invention is characterized in that the executing nodes comprise a first executing node and a second executing node, the first executing node being a primary node and comprising first checking means for checking the storing means, first collecting means for collecting first schedules on the first executing node's own initiative and first marking means for marking the first schedules in the storing means, and the second executing node being a secondary node and comprising second checking means for checking the storing means, second collecting means for collecting second schedules on the second executing node's own initiative and second marking means for marking the second schedules in the storing means.

By introducing, per node, the checking means for checking the storing means on the executing node's own initiative and the collecting means for collecting the schedules on the executing node's own initiative, all without the executing node being monitored by a monitoring process of a system supervisor, the system according to the invention has become relatively simple. By introducing at least two different kinds of nodes, primary nodes and secondary nodes, a node hierarchy has been created, to avoid arbitration.

The system according to the invention is further advantageous, inter alia, in that at least one so-called single point of failure has been removed (the monitoring process). This makes the system according to the invention more reliable.

The first marking means of the primary node for example mark a first schedule as "being executed" in case the first collecting means of the primary node want to collect or are collecting or have collected this first schedule. As a result, the second checking means of the secondary node will, while checking the storing means, ignore or overlook or not even find this first schedule.

It is to be noted that the US Patent Application US-A-5 182 640 by TAKANO et al (26 January 1993 discloses a broadcast program transmission control apparatus and method using a scheduling computer to produce program scheduling signals representing a schedule of programs to be generated at predetermined times by respective ones of a plurality of program generation devices. Therein, each program generation device is provided with a corresponding controller into which the respective program scheduling signals are downloaded from the scheduling computer and a switching device is operative to switch the programs generated by the program generation devices to a master broadcast output.

Although this known document discloses a scheduling computer for downloading schedules into controllers, these controllers follow these schedules and do therefore not collect the schedules on their own initiative as in the present invention.

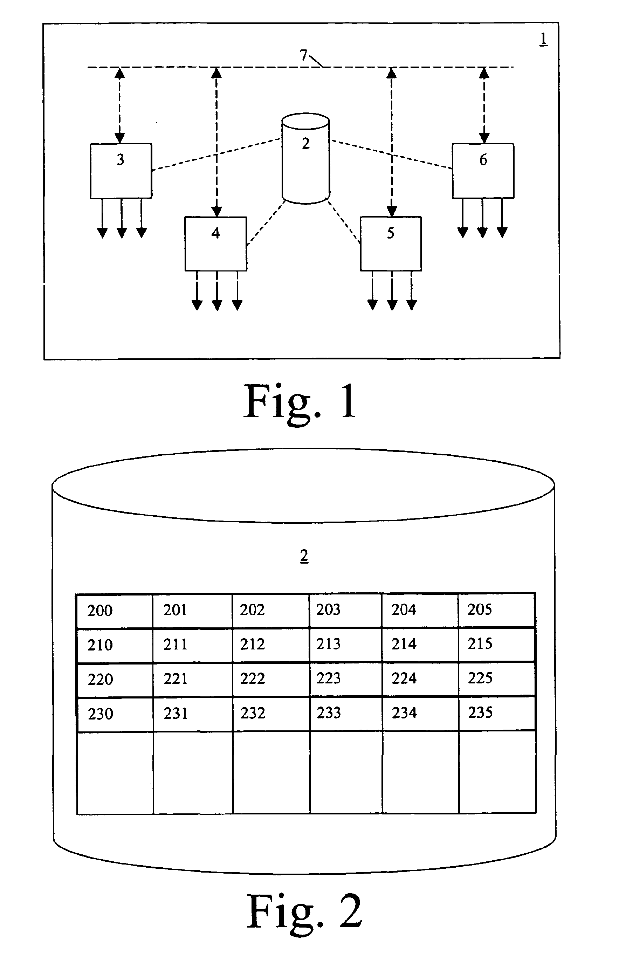

Moreover, it deals with case to improve scheduling of different program parts on "plurality of program generation devices" and assumes that different devices can execute different program parts and has "means for loading each device control means with the respective program scheduling signals". In the present invention however, each device can execute the same schedules. The apparatus of the known document does not really show address resilience. If, for example, the "Still Image System" (104 on Fig 2) used as "Program Generation Device" fails this is not recoverable. In the present invention, any node failure is recoverable.

Finally, there is a scheduling computer for downloading schedules into the controllers. This is the single point of failure, which is eliminated by the present invention.

It is also to be noted that the US Patent Application US 2003/093530 A1 by SYED MAJID (15 May 2003) discloses a system and method for intelligently scheduling, through multilevel arbitration, broadcast digital radio content and advertising using a sophisticated communication protocol. Therein, arbitration of broadcast time slots is based on classifications, prioritization, level of service required, bit rate and QoS (quality of service) requirements, best acceptable effort, and type of data (e.g., audio, video, graphics, text) broken into real-time or non-real-time determinations. A hierarchical gateway system is used to arbitrate and schedule the broadcasted content for each broadcast station (exciter). The broadcasted content includes material from national and local content providers to include music, video, graphics, text, and partial content downloads. A central gateway receives requests from national content providers to fill broadcast slots. The requests include the parameters necessary to, not only arbitrate content and advertising, but also to arbitrate based on a recognition of specific content type, requirement for broadcast, and end user device requirements.

However, this other known document do not disclose that nodes should collect the schedules on their own initiative, on the contrary, it discloses (in paragraph 24) that a gateway provides scheduling and that means that there is some kind of master and as a result there cannot be an own initiative as in the present invention.

It is further to be noted that the US Patent US-B1-6 330 719 by ZIGMOND DANIEL J et al (11 December 2001) discloses that, in interactive television, a broadcaster may broadcast triggers to a great many receiver units prompting the receiver units to attempt to send requests to a single destination on the Internet at roughly the same time. Such a large number of simultaneous requests can give rise to throughput problems and server overload. A receiver unit in accordance with the invention, rather than immediately attempting to send a request, waits a period of time (for example, a random period) before sending the request so as not to overload the server. In one embodiment, a trigger is received on an interactive television receiver unit prompting the viewer to select an icon. If the viewer selects the icon, then a browser in the receiver unit retrieves a web page on the Internet identified by a URL in the trigger. The web page includes an indication of a destination, scheduling information, and a form area. The viewer enters user information in association with the form area. The browser captures that user information, incorporates it into a request, and then stores the request in a queue along with the scheduling information. The browser periodically checks the scheduling information in the queue and determines from the scheduling information if it is time to send the request. When the browser determines the time has come to send a request in the queue, the browser retrieves the request and sends it to the destination. The browser may then receive a return response and display it.

In this further known device, receiving units wait a random amount of time before they react to a trigger. But they must receive a trigger before they react randomly. There is thus no "own initiative" either.

Furthermore, this further known document does not address resilience. It describes a queuing mechanism driven by the central monitoring process (distribution triggers). This is the single point of failure, the need for which has been removed in the present invention.

An embodiment of the system according to the invention is characterized in that the first executing node comprises a first event driven scheduler for controlling the first means and in that the second executing node comprises a second event driven scheduler for controlling the second means.

The schedulers are event driven or schedule driven and control the means. These means may form part of the schedulers or not.

An embodiment of the system according to the invention is characterized in that the executing nodes are adapted to compete for executing the schedules, the primary node being more privileged than the secondary node.

Without the executing nodes being monitored by a monitoring process of a system supervisor, the executing nodes will be in competition with each other. The fact that primary nodes are more privileged than secondary nodes is one way to avoid arbitration. Other ways to avoid arbitration are not to be excluded.

An embodiment of the system according to the invention is characterized in that the first checking means check the storing means a first predefined time-interval ahead of an actual schedule and the second checking means check the storing means a second predefined time-interval ahead of an actual schedule, the first predefined time-interval being larger than the second predefined time-interval.

The fact that the different checking means check the storing means different predefined time-intervals ahead of the actual schedule is one way to make the primary nodes more privileged than the secondary nodes. Other ways to make the primary nodes more privileged than the secondary nodes are not to be excluded.

An embodiment of the system according to the invention is characterized in that the schedules are defined by time information and type information.

The time information defines for example when the schedule is to be executed and the type information defines for example to which category the schedule belongs.

An embodiment of the system according to the invention is characterized in that the time information comprises a start time and a stop time and in that the type information defines a type and a destination.

The destination may be in the form of an internet protocol address, without excluding other addresses such as medium access control addresses and uniform resource locators. The type for example defines a broadcast or a content distribution or a content delivery.

An embodiment of the system according to the invention is characterized in that the executing nodes form a cluster of nodes, the primary node usually delivering services and the secondary node only delivering services after a loss of the primary node.

The secondary node is for example a stand-by node which is waiting for the primary node to go down and for replacing this primary node after the primary node has gone down.

An embodiment of the system according to the invention is characterized in that the system comprises an internet protocol television broadcast system.

Especially but not exclusively for internet protocol television broadcast system it will be a great advantage to use the competing and executing nodes which are not monitored by a monitoring process of a system supervisor.

An embodiment of the system according to the invention is characterized in that the system comprises a server system wherein the nodes are server nodes or comprises a network system wherein the nodes are network nodes.

The server nodes may be in the same housing as the server storing means or not. The network nodes will usually each have their own housing. The network storing means may be in the same housing as one of the network nodes or not and then have their own housing.

The invention is based upon an insight, inter alia, that a monitoring process forms a so-called single point of failure, and is based upon a basic idea, inter alia, that the monitoring process can be avoided by letting the executing nodes check and collect on their own initiative and without being monitored by a monitoring process of a system supervisor.

The invention solves the problem, inter alia, to provide a system that is relatively simple. The system according to the invention is further advantageous, inter alia, in that at least one so-called single point of failure has been removed (the monitoring process). This makes the system according to the invention more reliable.

These and other aspects of the invention will be apparent from and elucidated with reference to the embodiments(s) described hereinafter.
Fig. 1 shows diagrammatically a system according to the invention comprising storing means and executing nodes according to the invention,
Fig. 2 shows diagrammatically in greater detail storing means for use in a system according to the invention, and
Fig. 3 shows diagrammatically in greater detail a first executing node according to the invention and a second executing node according to the invention.

The system 1 according to the invention shown in Fig. 1 comprises four executing nodes 3-6. A receiving side of each executing node 3-6 is coupled to a supplier 7 and a transmitting side of each executing node 3-6 is coupled to further (executing or non-executing) nodes not shown. A control side of each executing node 3-6 is coupled to storing means 2 which are shown in Fig. 2 in greater detail. The system 1 may comprise a server system wherein the executing nodes 3-6 are server nodes or may comprise a network system wherein the executing nodes 3-6 are network nodes. The server nodes may be in the same housing as the server storing means or not. The network nodes will usually each have their own housing. The network storing means may be in the same housing as one of the network nodes or not and then have their own housing.

The storing means 2 shown in Fig. 2 comprise for example a table memory with rows and columns. Each row for example comprises one schedule defined by a start information and type information to be found in different columns. For example a schedule 200 is defined by a start time 201, a stop time 202, a type 203 and a destination 204. For example a schedule 210 is defined by a start time 211, a stop time 212, a type 203 and a destination 204 etc.

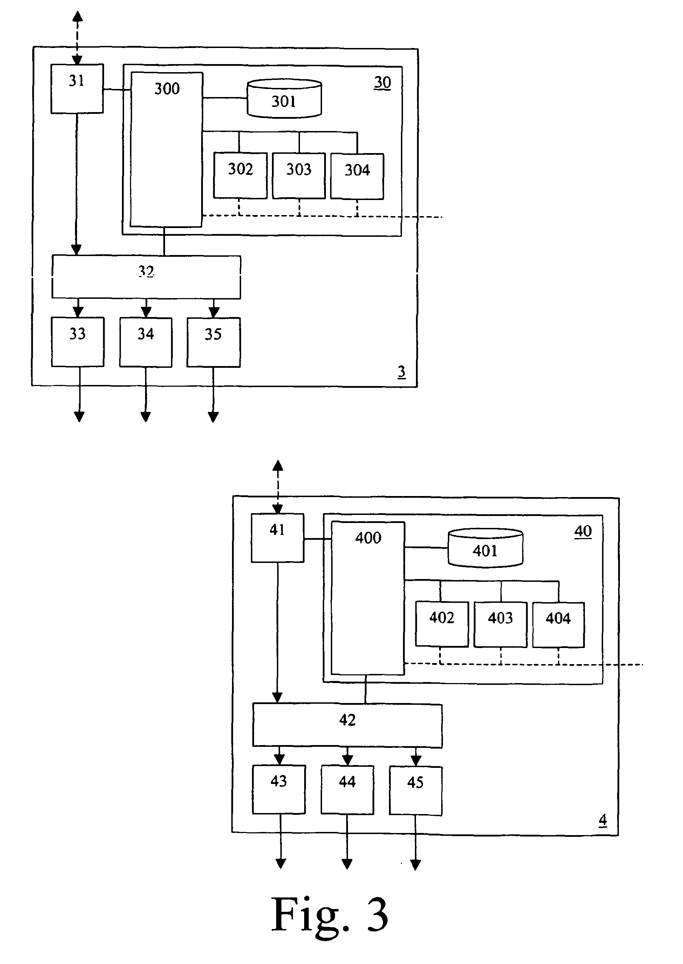

The first executing node 3 shown in Fig. 3 comprises a controller 30 coupled to a supplier interface 31, to a switch 32 and to node interfaces 33-35. The supplier interface 31 is further coupled to the supplier 7 shown in Fig. 1 and to the switch 32. The node interfaces 33-35 are further coupled to the switch 32 and to the further nodes not shown. The controller 30 for example comprises a first (hardware and/or software) scheduler 300 coupled to a memory 301, to first (hardware and/or software) checking means 302 for checking the storing means 2 and to first (hardware and/or software) collecting means 303 for collecting first schedules on the first executing node's own initiative from the storing means 2 and to first (hardware and/or software) marking means 304 for marking the first schedules in the storing means 2. These means 302-304 are thereto further coupled to the storing means 2.

The second executing node 4 shown in Fig. 3 comprises a controller 40 coupled to a supplier interface 41, to a switch 42 and to node interfaces 43-45. The supplier interface 41 is further coupled to the supplier 7 shown in Fig. 1 and to the switch 42. The node interfaces 43-45 are further coupled to the switch 42 and to the further nodes not shown. The controller 40 for example comprises a second (hardware and/or software) scheduler 400 coupled to a memory 401, to second (hardware and/or software) checking means 402 for checking the storing means 2 and to second (hardware and/or software) collecting means 403 for collecting second schedules on the second executing node's own initiative from the storing means 2 and to second (hardware and/or software) marking means 404 for marking the second schedules in the storing means 2. These means 402-404 are thereto further coupled to the storing means 2.

In a prior art situation, somewhere in the system 1, for example inside or near the storing means 2, there is a monitoring process for monitoring the nodes 3-6 for allocating the schedules 200, 210, 220, 230 stored in the storing means 2 to the different nodes 3-6 (one schedule can only be allocated to one node at a time). Such a monitoring process forms for example part of a system supervisor or is controlled by such a system supervisor. This monitoring process forms a so-called single point of failure. In case the monitoring process fails, the whole system fails. The monitoring process further increases a complexity of the system 1.

To avoid such a monitoring process, in the system 1 according to the invention, the first executing node 3 is defined to be a primary node that comprises the first checking means 302 for checking the storing means 2 and the first collecting means 303 for collecting first schedules on the first executing node's own initiative, and the second executing node 4 is defined to be a secondary node that comprises the second checking means 402 for checking the storing means 2 and the second collecting means 403 for collecting second schedules on the second executing node's own initiative. The introduction of at least two different kinds of nodes, primary nodes and secondary nodes, results in a node hierarchy being created, to avoid prior art arbitration. Further, at least one so-called single point of failure has been removed by having removed the monitoring process. This increases the reliability of the system 1 according to the invention.

So, compared to a prior art situation, the executing nodes 3, 4 are no longer monitored by a system supervisor and are no longer instructed what to do. Contrary to that, the executing nodes 3, 4 check the storing means 2 on their own initiative and independently from each other, and collect the schedules 200, 210, 220, 230 under two conditions. Firstly, a schedule 200, 210, 220, 230 must still be available to be collected by an executing node 3, 4, and secondly, the executing node 3, 4 must be willing and prepared and capable to collect the schedule 200, 210, 220, 230.

To be sure that a schedule is still available to be collected by an executing node 3, 4 and to avoid that two executing nodes 3, 4 collide when checking and/or collecting schedules 200, 210, 220, 230, internal or external clocks of the executing nodes 3, 4 could be synchronized such that the checking and/or the collecting by the executing nodes 3, 4 are separated in time from each other and more than is strictly necessary. This however is a relatively inefficient solution.

According to a more efficient solution, the first executing node 3 comprises the first marking means 303 for marking the first schedules in the storing means 2 and the second executing node 4 comprises the second marking means 403 for marking the second schedules in the storing means 2. The first marking means 303 of the primary node for example mark a first schedule as "being executed" in case the first collecting means 302 of the primary node want to collect or are collecting or have collected this first schedule. As a result, the second checking means 402 of the secondary node will, while checking the storing means 2, ignore or overlook or not even find this first schedule. Thereto, in the storing means 2, the schedules 200, 210, 220, 230 for example comprise the marks 205, 215, 225, 235.

The first scheduler 300 for example comprises a first event driven scheduler for controlling the memory 301 and the first means 302-304 and the second scheduler 400 for example comprises a second event driven scheduler for controlling the memory 401 and the second means 402-404. Alternatively, the first and second means 302-304, 402-404 may form part of the first and second schedulers.

Without the executing nodes 3, 4 being monitored by a monitoring process of a system supervisor, the executing nodes 3, 4 will be in competition with each other. So, the executing nodes 3, 4 compete for executing the schedules, with the primary node being more privileged than the secondary node. Thereto, each executing node 3, 4 may get a (different) priority indicator for solving collisions between the checking and/or collecting executing nodes 3, 4. This however is a relatively non-elegant solution.

According to a relatively elegant solution, the first checking means 302 check the storing means 2 a first predefined time-interval ahead of an actual schedule and the second checking means 402 check the storing means 2 a second predefined time-interval ahead of an actual schedule, the first predefined time-interval being larger than the second predefined time-interval. This way, the primary node checks for example a time-interval T ahead of an actual schedule (or an actual time), the secondary node checks for example a time-interval T-Δt ahead of an actual schedule (or an actual time), a tertiary node checks for example a time-interval T-2 Δt ahead of an actual schedule (or an actual time) etc. An Nth node checks for example a time-interval T-(N-1) Δt ahead of an actual schedule (or an actual time), whereby (N-1) Δt < T. As a result, the primary node has the primary choice and the secondary node has the secondary choice and the tertiary node has the tertiary choice etc.

The schedules 200, 210, 220, 230 are defined by time information 201, 202, 211, 212, 221, 222, 231, 232 and type information 203, 204, 213, 214, 223, 224, 233, 234. The time information 201, 202, 211, 212, 221, 222, 231, 232 comprises a start time 201, 211, 221, 231 and a stop time 202, 212, 222, 232 and the type information 203, 204, 213, 214, 223, 224, 233, 234 defines a type 203, 213, 223, 233 and a destination 204, 214, 224, 234.

The destination 204, 214, 224, 234 may be in the form of an internet protocol address, without excluding other addresses such as medium access control addresses and uniform resource locators. The type 203, 213, 223, 233 for example defines a broadcast or a content distribution or a content delivery.

The executing nodes 3-6 may form a cluster of nodes, whereby the primary node usually delivers services and the secondary node only delivers services after a loss of the primary node. The secondary node is for example a stand-by node which is waiting for the primary node to go down and for replacing this primary node after the primary node has gone down. The tertiary node for example only delivers services after a loss of the secondary node. The tertiary node is for example a stand-by node which is waiting for the secondary node to go down and for replacing this secondary node after the secondary node has gone down.

Alternatively, several of the executing nodes 3-6 may be primary nodes and several of the other executing nodes 3-6 may be secondary nodes etc.

Especially but not exclusively for internet protocol television broadcast system it will be a great advantage to use the competing and executing nodes 3-6 which are not monitored by a monitoring process of a system supervisor. For such an internet protocol television broadcast system, a schedule 200 for example defines that at a start time 20h00 until a stop time 22h00 a content delivery A is to be delivered to a destination B, and a schedule 210 for example defines that at a start time 23h00 until a stop time 24h00 a content delivery C is to be delivered to a destination D. Then, the primary node that for example checks the storing means ten hours in advance will find at 10h00 the schedule 200 and will mark it as being executed and will find at 13h00 the schedule 210 and will mark it as being executed. Then, for example shortly before 20h00, the primary node will collect and/or receive the entire content delivery A or at least a part of the content delivery A from the supplier and will start passing this entire content delivery or this part of the content delivery to the destination B etc. and, for example shortly before 23h00, the primary node will collect and/or receive the entire content delivery C or at least a part of the content delivery C from the supplier and will start passing this entire content delivery or this part of the content delivery to the destination D etc.

In case the primary node cannot handle both content deliveries A and C that shortly after each other, the primary node will not mark the schedule 210 as being executed, and the secondary node that for example checks the storing means six hours in advance will find at 17h00 the schedule 210 and will mark it as being executed. Then, for example shortly before 23h00, the secondary node will collect and/or receive the entire content delivery C or at least a part of the content delivery C from the supplier and will start passing this entire content delivery or this part of the content delivery to the destination D etc.

In case the primary node goes down at 12h00, the schedule 200 has already been marked by the primary node but the schedule 210 has not yet been marked. The secondary node that for example checks the storing means six hours in advance will find at 17h00 the schedule 210 and will mark it as being executed etc. For the schedule 200, two options exist. According to a first option, in case the storing means are informed of the primary node having gone down, the storing means might delete the mark introduced by the primary node and as a result the secondary node that for example checks the storing means six hours in advance will find at 14h00 the schedule 200 and will mark it as being executed etc. According to a second option, in case the storing means are not informed of the primary node having gone down, the schedule 200 will be lost.

The invention has the following advantages over prior art solutions. Firstly, resilient internet protocol television broadcasts and content distribution services are implemented in a distributed content delivery/video server network without the mentioned single point of failure being present. Secondly, the need for monitoring processes and their associated overhead has been removed. Thirdly, a loss of N-1 executing nodes is tolerated. Fourthly, it can be implemented on low cost general purpose computers because it does not rely on high availability monitoring processes. And fifthly, it can easily scale up and down because there is no inter-node communication involved.

In Fig. 1 and 3, each coupling / connection may be a wired coupling / connection or a wireless coupling / connection. Any unit shown may be divided into sub-units, and any two or more units may be integrated into a new and larger unit. Any unit shown may comprise hardware and/or software. The computer program product according to the invention for executing schedules 200, 210, 220, 230 may be stored on a fixed medium such as the memory 301, 401 or on a removable medium not shown. A particular incarnation of the storing means might be a memory or a database, but other incarnations can be used for storing schedules as well, if they are accessible by the execution nodes for checking for new schedules either directly or indirectly via proxy solutions.

The expression "for" in for example "for storing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities. The word "means" may comprise a single means or a single unit or a plurality of means or a plurality of units.

## Claims

1. System (1) comprising storing means (2) for storing schedules (200, 210, 220, 230) and comprising executing nodes (3, 4, 5, 6) for executing the schedules (200, 210, 220, 230), **characterized in that** the executing nodes (3, 4, 5, 6) comprise a first executing node (3) and a second executing node (4), the first executing node (3) being a primary node and comprising first checking means (302) for checking the storing means (2), first collecting means (303) for collecting first schedules on the first executing node's own initiative and first marking means (304) for marking the first schedules in the storing means (2), and the second executing node (4) being a secondary node and comprising second checking means (402) for checking the storing means (2), second collecting means (403) for collecting second schedules on the second executing node's own initiative and second marking means (404) for marking the second schedules in the storing means (2).

2. System (1) as defined in claim 1, **characterized in that** the first executing node (3) comprises a first event driven scheduler (300) for controlling the first means (302-304) and **in that** the second executing node (4) comprises a second event driven scheduler (400) for controlling the second means (402-404).

3. System (1) as defined in claim 1 or 2, **characterized in that** the executing nodes (3, 4, 5, 6) are adapted to compete for executing the schedules (200, 210, 220, 230), the primary node being more privileged than the secondary node.

4. System (1) as defined in claim 1, 2 or 3, **characterized in that** the first checking means (302) check the storing means (2) a first predefined time-interval ahead of an actual schedule and the second checking means (402) check the storing means (2) a second predefined time-interval ahead of an actual schedule, the first predefined time-interval being larger than the second predefined time-interval.

5. System (1) as defined in claim 1, 2, 3 or 4, **characterized in that** the schedules (200, 210, 220, 230) are defined by time information (201, 202, 211, 212, 221, 222, 231, 232) and type information (203, 204, 213, 214, 223, 224, 233, 234).

6. System (1) as defined in claim 5, **characterized in that** the time information (201, 202, 211, 212, 221, 222, 231, 232) comprises a start time (201, 211, 221, 231) and a stop time (202, 212, 222, 232) and **in that** the type information (203, 204, 213, 214, 223, 224, 233, 234) defines a type (203, 213, 223, 233) and a destination (204, 214, 224, 234).

7. System (1) as defined in claim 1, 2, 3, 4, 5 or 6, **characterized in that** the executing nodes (3, 4, 5, 6) form a cluster of nodes, the primary node usually delivering services and the secondary node only delivering services after a loss of the primary node.

8. System (1) as defined in claim 1, 2, 3, 4, 5 or 6, **characterized in that** the system (1) comprises an internet protocol television broadcast system.

9. System (1) as defined in claim 1, 2, 3, 4, 5 or 6, **characterized in that** the system (1) comprises a server system wherein the executing nodes (3, 4, 5, 6) are server nodes or comprises a network system wherein the executing nodes (3, 4, 5, 6) are network nodes.

## Patentansprüche

1. System (1) mit Speichermitteln (2) zum Speichern von Ablaufplänen (200, 210, 220, 230) und mit ausführenden Knoten (3, 4, 5, 6) zum Ausführen der Ablaufpläne (200, 210, 220, 230), **dadurch gekennzeichnet, dass** die ausführenden Knoten (3, 4, 5, 6) einen ersten ausführenden Knoten (3) und einen zweiten ausführenden Knoten (4) umfassen, wobei der erste ausführende Knoten (3) ein primärer Knoten ist und erste Prüfmittel (302) zum Prüfen der Speichermittel (2), erste Erfassungsmittel (303) zum Erfassen von ersten Zeitplänen aus Eigeninitiative des ersten ausführenden Knotens und erste Markierungsmittel (304) zum Markieren der ersten Ablaufpläne in den Speichermitteln (2) umfasst, und wobei der zweite ausführende Knoten (4) ein sekundärer Knoten ist und zweite Prüfmittel (402) zum Prüfen der Speichermittel (2), zweite Erfassungsmittel (403) zum Erfassen von zweiten Ablaufplänen aus Eigeninitiative des zweiten ausführenden Knotens und zweite Markierungsmittel (404) zum Markieren der zweiten Ablaufpläne in den Speichermitteln (2) umfasst.

2. System (1) nach Anspruch 1, **dadurch gekennzeichnet, dass** der erste ausführende Knoten (3) einen ersten ereignisgesteuerten Ablaufplaner (300) zur Steuerung der ersten Mittel (302-304) umfasst, und dass der zweite ausführende Knoten (4) einen zweiten ereignisgesteuerten Ablaufplaner (400) zur Steuerung der zweiten Mittel (402-404) umfasst.

3. System (1) nach Anspruch 1 oder 2, **dadurch gekennzeichnet, dass** die ausführenden Knoten (3, 4, 5, 6) dazu ausgelegt sind, für das Ausführen der Ablaufpläne (200, 210, 220, 230) zu konkurrieren, wobei der primäre Knoten gegenüber dem sekundären Knoten vorrangig ist.

4. System (1) nach Anspruch 1, 2 oder 3, **dadurch gekennzeichnet, dass** die ersten Prüfmittel (302) die Speichermittel (2) in einem vordefinierten ersten Zeitintervall vor einem aktuellen Ablaufplan prüfen und die zweiten Prüfmittel (402) die Speichermittel (2) in einem vordefinierten zweiten Zeitintervall vor einem aktuellen Ablaufplan prüfen, wobei das vordefinierte erste Zeitintervall größer als das vordefinierte zweite Zeitintervall ist.

5. System (1) nach Anspruch 1, 2, 3 oder 4, **dadurch gekennzeichnet, dass** die Ablaufpläne (200, 210, 220, 230) anhand von Zeitinformationen (201, 202, 211, 212, 221, 222, 231, 232) und von Typinformationen (203, 204, 213, 214, 223, 224, 233, 234) definiert werden.

6. System (1) nach Anspruch 5, **dadurch gekennzeichnet, dass** die Zeitinformationen (201, 202, 211, 212, 221, 222, 231, 232) eine Startzeit (201, 211, 221, 231) und eine Endzeit (202, 212, 222, 232) umfassen, und dass die Typinformationen (203, 204, 213, 214, 223, 224, 233, 234) einen Typ (203, 213, 223, 233) und ein Ziel (204, 214, 224, 234) definieren.

7. System (1) nach Anspruch 1, 2, 3, 4, 5 oder 6, **dadurch gekennzeichnet, dass** die ausführenden Knoten (3, 4, 5, 6) einen Cluster von Knoten bilden, wobei der primäre Knoten üblicherweise Dienste bereitstellt und der sekundäre Knoten nur nach Verlust des primären Knotens Dienste bereitstellt.

8. System (1) nach Anspruch 1, 2, 3, 4, 5 oder 6, **dadurch gekennzeichnet, dass** das System (1) ein Internetprotokoll-Fernsehübertragungssystem umfasst.

9. System (1) nach Anspruch 1, 2, 3, 4, 5 oder 6, **dadurch gekennzeichnet, dass** das System (1) ein Serversystem umfasst, wobei die ausführenden Knoten (3, 4, 5, 6) Serverknoten sind, oder ein Netzwerksystem umfasst, wobei die ausführenden Knoten (3, 4, 5, 6) Netzwerkknoten sind.

## Revendications

1. Système (1) comprenant des moyens de stockage (2) pour stocker des programmes (200, 210, 220, 230) et comprenant des noeuds d'exécution (3, 4, 5, 6) pour exécuter les programmes (200, 210, 220, 230), **caractérisé en ce que** les noeuds d'exécution (3, 4, 5, 6) comprennent un premier noeud d'exécution (3) et un second noeud d'exécution (4), le premier noeud d'exécution (3) étant un noeud primaire et comprenant des premiers moyens de contrôle (302) pour contrôler les moyens de stockage (2), des premiers moyens de collecte (303) pour collecter des premiers programmes sur la propre initiative du premier noeud d'exécution et des premiers moyens de marquage (304) pour marquer les premiers programmes dans les moyens de stockage (2), et le second noeud d'exécution (4) étant un noeud secondaire et comprenant des seconds moyens de contrôle (402) pour contrôler les moyens de stockage (2), des seconds moyens de collecte (403) pour collecter des seconds programmes sur la propre initiative du second noeud d'exécution et des seconds moyens de marquage (404) pour marquer les seconds programmes dans les moyens de stockage (2).

2. Système (1) selon la revendication 1, **caractérisé en ce que** le premier noeud d'exécution (3) comprend un premier ordonnanceur guidé par les évènements (300) pour commander les premiers moyens (302-304) et **en ce que** le second noeud d'exécution (4) comprend un second ordonnanceur guidé par les évènements (400) pour commander les seconds moyens (402-404).

3. Système (1) selon la revendication 1 ou 2, **caractérisé en ce que** les noeuds d'exécution (3, 4, 5, 6) sont adaptés pour entrer en compétition pour l'exécution des programmes (200, 210, 220, 230), le noeud primaire étant plus privilégié que le noeud secondaire.

4. Système (1) selon la revendication 1, 2 ou 3, **caractérisé en ce que** les premiers moyens de contrôle (302) contrôlent les moyens de stockage (2) à un premier intervalle de temps prédéfini précédant un programme réel et les seconds moyens de contrôle (402) contrôlent les moyens de stockage (2) à un second intervalle de temps prédéfini précédant un programme réel, le premier intervalle de temps prédéfini étant plus grand que le second intervalle de temps prédéfini.

5. Système (1) selon la revendication 1, 2, 3 ou 4, **caractérisé en ce que** les programmes (200, 210, 220, 230) sont définis par des informations de temps (201, 202, 211, 212, 221, 222, 231, 232) et par des informations de type (203, 204, 213, 214, 223, 224, 233, 234).

6. Système (1) selon la revendication 5, **caractérisé en ce que** les informations de temps (201, 202, 211, 212, 221, 222, 231, 232) comprennent un temps de départ (201, 211, 221, 231) et un temps d'arrêt (202, 212, 222, 232) et **en ce que** les informations de type (203, 204, 213, 214, 223, 224, 233, 234) définissent un type (203, 213, 223, 233) et une destination (204, 214, 224, 234).

7. Système (1) selon la revendication 1, 2, 3, 4, 5 ou 6, **caractérisé en ce que** les noeuds d'exécution (3, 4, 5, 6) forment une grappe de noeuds, le noeud primaire délivrant généralement des services et le noeud secondaire ne délivrant des services qu'après une perte du noeud primaire.

8. Système (1) selon la revendication 1, 2, 3, 4, 5 ou 6, **caractérisé en ce que** le système (1) comprend un système de diffusion de télévision au protocole Internet.

9. Système (1) selon la revendication 1, 2, 3, 4, 5 ou 6, **caractérisé en ce que** le système (1) comprend un système de serveur dans lequel les noeuds d'exécution (3, 4, 5, 6) sont des noeuds de serveur ou comprend un système de réseau dans lequel les noeuds d'exécution (3, 4, 5, 6) sont des noeuds de réseau.
